# EUROPEAN PATENT APPLICATION

(11) **EP 3 434 115 A1**
(43) Date of publication of application: **30.01.2019**
(21) Application number: 18150304.6
(22) Date of filing: 04.01.2018
(51) Int. Cl.: A23L 29/225, A23J 3/22

(54) **VEGETARIAN OR VEGAN FOOD PRODUCT COMPRISING A BINDER**

(30) Priority: 04.01.2017 NL 2018123
(71) Applicant: Renet, Michael Joseph Gerard Marie, 5032 AK Tilburg (NL)
(72) Inventor: RENET-WILDEBOER, Saskia Marijke, 5032 AK TILBURG (NL)
(74) Representative: Algemeen Octrooi- en Merkenbureau B.V.

(57) **Abstract**

The present invention relates to a food product that is made up of ingredients of the vegetarian and vegan type, to which one or more natural binders are also added. The present invention further relates to a method for preparing such a food product, for example by means of cooking, baking and roasting.

## Description

The present invention relates to a food product that is made up of ingredients of the vegetarian and vegan type, to which one or more natural binders are also added.

Nowadays consumers are becoming increasingly aware of the foodstuffs that they ingest. Consumers are also developing increasing awareness about the manner in which foodstuffs are produced. In light of this, there is a trend whereby consumers make a conscious choice for the well-being of people, animals and the planet. In this connection, some consumers are endeavouring to abandon the use of animals and products of animal origin completely. Such people are also called vegans. A vegan therefore does not eat meat or fish, or any dairy products, eggs, honey and other products of animal origin or with animal ingredients. Thus, vegans do not use any animal products, such as meat, fish, dairy produce, eggs, honey, gelatine, animal e-numbers or products in which these animal products are incorporated. Vegans have a vegetable diet.

Besides the aforementioned situation, there are also more and more consumers who cannot tolerate gluten and therefore have to switch to gluten-free products. As there are also consumers who are becoming increasingly aware that addition of e-numbers and sugars is harmful to health, and more and more consumers suffer from one or more allergies, there is a need for food products that consist of natural ingredients.

Moreover, consumers increasingly want to change over to organic products, not chemically processed products. All these factors lead to the need for a food product in which only vegetable raw materials are used, without gluten, completely organic, without additions of e-numbers, without sugars and completely free from the 14 allergens given on the EU list. The aforementioned list is made up as follows: gluten-containing cereals, such as wheat (including spelt and khorasan wheat, formerly kamut), rye, barley and oats, egg, fish, peanut, nuts such as almonds, hazelnuts, walnuts, cashew nuts, pecan nuts, Brazil nuts, pistachio nuts and macadamia nuts, soya, milk, including lactose, crustaceans, molluscs, celery, mustard, sesame seeds, sulphite and lupin.

A method is known from International application WO2011139906 for making baked products, wherein so-called chia seeds are first hydrated in order to obtain a hydrated chia seed ingredient, and this ingredient is used as an emulsifier and texturizer in the preparation of a gluten-free baked product.

A synthetic, vegan / vegetarian substitute for bacon fat is known from the Canadian publication CA 2837347, to be used for cooking, baking and roasting of foodstuffs. The substitute is prepared by melting and reconstituting vegetable oils (including canola, soya, coconut or a combination of vegetable oils) with the taste of smoked bacon by adding various ingredients.

A method is known from the United States Patent application publication number US 2014/0120212 for preparing a fermented food product, comprising the steps of: providing a whole grain mixture, which is washed with water to remove unwanted constituents, such as flakes and sand, said mixture comprising whole grain sweet rice, whole grain quinoa, whole grain amaranth, and not including soya, cooking the washed mixture so that a cooked mixture is formed, fermenting the resultant cooked mixture using a starter culture, and finally converting the cooked mixture into a pasta. The resultant fermented foodstuff thus comprises a combination of fermented whole grain sweet rice, fermented whole grain quinoa and fermented whole grain amaranth, possibly supplemented with fermented whole grain sprouts selected from the group of whole grain sprouts, such as barley, oats, millet, buckwheat, rye, teff and kamut, as well as water, sweetener and fat. The whole grain fermentation process used in this document comprises a natural anaerobic bacterial action of LAB (Lactic Acid Bacteria), wherein enzymes break down the food substances inherently present in the mixture, namely complex carbohydrates to simple sugars, proteins to polypeptides and peptides and then to amino acids and complex fat molecules to free fatty acids, providing a good intestinal flora, easy absorption by the digestive system and improvement of the nutritional value. The step stated in this United States Patent application for preparing a fermented food product comprises the step of fermenting the cooked mixture with the aid of a starter culture. Thus, a predetermined culture of probiotics can be added to and/or mixed in with the cooked mixture, after which fermentation is carried out. In general, cultures such as *Lactobacillus, Leuconostoc,* yeasts, fungi, which break down difficultly degradable materials (gluten, lectin, phytic acid) are added during this fermentation step so that the bioavailability of food substances therein is further improved. Thus, in this United States Patent application the fermentability of different cereals and mixtures is investigated to check whether they can be used in pasta as a substitute for the normal gluten in pasta. When preparing food products that are based on ingredients of the vegetarian and vegan type it is generally difficult to obtain a product of good homogeneity and consistency that can easily be processed further before consumption takes place. In particular, the mixing and kneading process results in an end product which, through insufficient mutual cohesion of the ingredients, easily falls apart during production of a finished product, such as a burger or ball that is suitable for consumption. If the product then has to be prepared, for example by frying, baking and roasting, or heating in an oven, the finished product can no longer be perceived as a whole, but as a hotchpotch of separate finished products. The consumer of such vegetarian and vegan products finds falling apart of the product as undesirable and detrimental.

In practice, sufficient binders are available that can rectify the problem outlined above. However, many of the binders used in practice are of animal origin and thus cannot be described as vegan and consequently cannot be used in a vegan product. There is also the question of the undesirable use of so-called e-numbers.

In practice it is also not possible to make a vegetarian or vegan food product with only cereals and raw materials that are gluten-free without adding some kind of binder. Chicken protein is used in a very large number of commercially available products, but this ingredient is undesirable on account of its animal origin. Another binder is soya protein, but that ingredient is on the list of allergens and consequently is undesirable.

One aim of the present invention is thus to provide a food product that is made up of ingredients of the vegetarian and vegan type, in which only one or more natural binders are used, which satisfy the requirements of veganism and the requirements of being gluten-free, free from allergens, and free from e-numbers.

Another aim of the present invention is thus to provide a food product that is made up of ingredients of the vegetarian and vegan type, only using one or more natural binders, wherein, in the production of the food product, a homogeneous and cohesive product is obtained, which does not fall apart undesirably.

The present invention therefore relates to a food product made up on the basis of ingredients of the vegetarian and vegan type, further comprising one or more natural binders, wherein the aforementioned natural binders are selected from the group of glutinous rice and glutinous maize.

The present invention relates in particular to a food product made up on the basis of ingredients of the vegetarian and vegan type, wherein glutinous rice is used as a natural binder.

By using the aforementioned natural binders, selected from the group of glutinous rice and glutinous maize, one or more of the aforementioned aims are achieved. The present inventors found in particular that a good, cohesive texture is obtained when a binder of this kind is used. Moreover, such binders are to be regarded as products that meet the aforementioned conditions of being vegan-friendly, organic and allergen-free. It should be noted that glutinous rice and glutinous maize are used in the present application without any fermentation process, as is known from the United States Patent application publication number US 2014/0120212 discussed above. Thus, the glutinous rice and glutinous maize to be used in the present application are not subjected to a fermentation process.

In one embodiment of the present invention it is desirable for the amount of the aforementioned one or more natural binders to be in the range 1-30 wt.%, preferably 5-20 wt.%, in particular 10-15 wt.%, based on the total weight of the food product. If an amount below the aforementioned lower limit is used, a food product is obtained that does not display good mutual cohesion. With an amount above the aforementioned upper limit, the consumer's taste perception will be adversely affected because the product will have a "doughy" bite. Problems are also encountered during processing, because the product is a kind of hard dough that is difficult to process.

The present inventors found that the content of amylose in the food product should be kept to a minimum. On heating, amylose could possibly lead to the formation of acrylamide, a compound that is to be regarded as a potentially harmful substance. Thus, it is to be preferred that the amount of amylose in the aforementioned natural binders is at most 0.5 wt.%, preferably at most 0.1 wt.%, based on the weight of the aforementioned binder.

For optimum display of the binder properties, it is desirable for the amount of amylopectin in the aforementioned natural binders to be at least 95 wt.%, preferably at least 98 wt.%, based on the weight of the aforementioned binder.

In the present food product, especially ingredients of the vegetarian and vegan type are used, in particular preferably one or more ingredients from the group of chickpeas, quinoa, oatmeal, especially gluten-free oatmeal, and sunflower seeds. Besides the aforementioned group of ingredients, it is also possible to add one or more other additional ingredients, especially from the group of onion (fresh), garlic powder, pepper, sea salt, ketchup, bouillon powder (AVO), green olive (granules), tomato flakes, tomato powder, dried oregano, lemongrass (fresh), green pepper (fresh), red chilli powder, lime leaf (fresh), creamed coconut (coconut), turmeric powder, ground cumin seed (cumin), ground coriander (coriander), ginger (fresh), lemon peel, oil, unrefined cane sugar, water, horseradish powder, coconut flakes and coconut milk.

In one embodiment, the present food product is free from gluten.

In another embodiment the present food product is free from soya proteins.

In another embodiment the present food product is free from chicken proteins.

In another embodiment the present food product is free from one or more supplementary binders, selected from the group of tapioca, arrowroot, linseed, chia seed, psyllium, potato starch, maize starch, E412, E406, E415, E414 and E410. Potato starch and maize starch as binders are mostly processed (chemically) in a factory and are therefore excluded from use in the present food product.

The present food product is in particular free from added refined sugars. The present food product is in particular free from ingredients of animal origin.

The present food product is in particular to be understood as a meat substitute, especially a burger, or as a stick or ball. However, the present food product is not limited to a particular geometric shape.

The present invention further relates to a method for preparing a food product based on ingredients of the vegetarian and vegan type, and further comprising one or more natural binders, said method comprising the following steps:
i) providing ingredients of the vegetarian and vegan type;
ii) providing one or more natural binders, selected from the group of glutinous rice and glutinous maize;
iii) combining the ingredients according to step i) and ii);
iv) kneading and forming the composition according to step iii).

For finally obtaining the finished product it is desirable that the method further comprises heating the product obtained after step iv), for example by frying, baking and roasting, or in a (microwave) oven.

In one embodiment of the present method for preparing a food product based on ingredients of the vegetarian and vegan type, glutinous rice and/or glutinous maize of the unfermented type are used as one or more natural binders in step ii).

The present invention will be explained below on the basis of a number of examples, and it should be noted that these examples only serve for purposes of explanation. Glutinous rice and/or glutinous maize of the unfermented type are always used in the examples, unless otherwise stated.

### Examples

Burgers were produced on the basis of four main ingredients, selected from the group of chickpeas, quinoa, oatmeal, especially gluten-free oatmeal, and sunflower seeds, supplemented with one or more other ingredients from the group of onion (fresh), garlic powder, pepper, sea salt, ketchup, bouillon powder (AVO), green olive (granules), tomato flakes, tomato powder, dried oregano, lemongrass (fresh), green pepper (fresh), red chilli powder, lime leaf (fresh), creamed coconut (coconut), turmeric powder, ground cumin seed (cumin), ground coriander (coriander), ginger (fresh), lemon peel, oil, unrefined cane sugar, water, horseradish powder, coconut flakes and coconut milk.

As binder, glutinous rice, glutinous maize, potato starch and maize starch were added in various amounts, varying from 1 wt.% to 30 wt.%, based on the total weight of the food product. The aforementioned four main ingredients were used in the following amounts: 35-55 wt.% chickpeas, 20-40 wt.% quinoa, 10-30 wt.% oatmeal, especially gluten-free oatmeal, and 1-10 wt.% sunflower seeds, the aforementioned percentages by weight being based on a total amount of 100 g of the aforementioned four main ingredients. A particular composition consists of 45.5 wt.% chickpeas, 30.3 wt.% quinoa, 18.2 wt.% oatmeal, especially gluten-free oatmeal, and 6.1 wt.% sunflower seeds.

The resultant products were judged by a panel on the basis of smell, taste, bite, cuttability and processability. The results are shown in the following table. The following assessments are used in the table: (-) not good, (--) bad / foul / sticky, (0) neutral, (+) good, (++) excellent / delicious.

**Table: assessment results**

| | **Wt.%** | **Smell** | **Taste** | **Bite** | **Cutting** | **Processability** |
|---|---|---|---|---|---|---|
| Glutinous rice | 1 | + | + | - | - | -- |
| | 5 | + | ++ | 0 | 0 | - |
| | 10 | + | ++ | ++ | ++ | ++ |
| | 15 | + | + | ++ | ++ | ++ |
| | 20 | + | 0 | - | + | + |
| | 25 | 0 | - | -- | -- | + |
| | 30 | 0 | - | -- | -- | - |
| Glutinous maize | 5 | + | ++ | + | 0 | -- |
| | 10 | + | ++ | ++ | + | - |
| | 15 | + | 0 | + | + | ++ |
| | 20 | + | 0 | -- | 0 | 0 |
| | 25 | + | - | -- | 0 | -- |
| Potato starch | 5 | + | - | 0 | 0 | -- |
| | 10 | + | -- | - | 0 | -- |
| | 15 | + | -- | - | + | + |
| | 20 | + | -- | -- | + | - |

It can be seen from the above table that both glutinous rice and glutinous maize as binder score a neutral to good assessment for the assessment criteria smell, taste, bite, cuttability and processability. Particularly good results are obtained with glutinous rice in an amount in the range 10-15 wt.%, based on the total weight of the food product.

Four tests were carried out with different amounts of probiotics for fermentation, added to a heated base mixture of glutinous rice and water. The aforementioned were carried out in order to investigate whether fermented glutinous rice can offer an advantage as a binder for vegetarian and vegan meal products.

### Preparation of the base mixture

An amount of 20 g of ground glutinous rice was added to 150 g of water. The water was first heated to the boiling point, after which the total amount of 20 g of glutinous rice was added. The mixture was stirred with a mixer for 30-60 s and then cooled to a constant temperature of 42 degrees Celsius.

### Fermentation mixture 1

The base mixture thus prepared was mixed with 1 capsule of Orthiflor Basic (a probiotic, namely a bacterial preparation (0.5x10⁸ colony-forming units (CFU), made up of (roughly equal proportions of Bifidobacterium lactis, Enterococcus faecium, Lactobacillus casei, Lactococcus lactis; marketed by Orthica)). The aforementioned probiotic also contained maize starch, gelatine, maltodextrin and a natural protein isolate. This hot fermentation mixture was then transferred to a cleaned container, sealed to be air-tight and stored for 72 hours at a constant temperature of 42 degrees Celsius.

### Fermentation mixture 2

The base mixture thus prepared was mixed with 2 capsules of Orthiflor Basic (a probiotic, namely a bacterial preparation (0.5x10⁸ colony-forming units (CFU), made up of (roughly equal proportions of Bifidobacterium lactis, Enterococcus faecium, Lactobacillus casei, Lactococcus lactis; marketed by Orthica)). The aforementioned probiotic also contained maize starch, gelatine, maltodextrin and a natural protein isolate. This hot fermentation mixture was then transferred to a cleaned container, sealed to be air-tight and stored for 72 hours at a constant temperature of 42 degrees Celsius.

### Fermentation mixture 3

The base mixture thus prepared was mixed with 3 capsules of Orthiflor Basic (a probiotic, namely a bacterial preparation (0.5x10⁸ colony-forming units (CFU), made up of (roughly equal proportions of Bifidobacterium lactis, Enterococcus faecium, Lactobacillus casei, Lactococcus lactis; marketed by Orthica)). The aforementioned probiotic also contained maize starch, gelatine, maltodextrin and a natural protein isolate. This hot fermentation mixture was then transferred to a cleaned container, sealed to be air-tight and stored for 72 hours at a constant temperature of 42 degrees Celsius.

### Fermentation mixture 4

The base mixture thus prepared was mixed with 4 capsules of Orthiflor Basic (a probiotic, namely a bacterial preparation (0.5x10⁸ colony-forming units (CFU), made up of (roughly equal proportions of Bifidobacterium lactis, Enterococcus faecium, Lactobacillus casei, Lactococcus lactis; marketed by Orthica)). The aforementioned probiotic also contained maize starch, gelatine, maltodextrin and a natural protein isolate. This hot fermentation mixture was then transferred to a cleaned container, sealed to be air-tight and stored for 72 hours at a constant temperature of 42 degrees Celsius.

The consistency of the fermentation mixtures 1, 2, 3 and 4 thus prepared was judged at various time points. After a period of 1 day, the fermentation mixtures 1, 2, 3 and 4 appeared to be unchanged. After a period of 2 days, the fermentation mixtures 1, 2, 3 and 4 appeared to be unchanged. After a period of 3 days the fermentation mixtures 1, 2, 3 and 4 showed a turning point in behaviour. The fermentation mixtures 1, 2, 3 and 4 had changed from the initially thick sticky mass to a thin watery liquid.

The present inventors thus observed that after a period of about 60 hours the fermentation mixtures 1, 2, 3 and 4 changed quite suddenly (within a short period of time of a number of hours) from a thick sticky porridge to a watery substance. The present inventors assume that the amylopectins are no longer usable and had decomposed in the fermentation process.

The fermentation mixtures 1, 2, 3 and 4 thus obtained were not suitable for use as a binder for vegetarian and vegan meal products.

The fermentation process of glutinous rice, before the glutinous rice is used as a binder for vegetarian and vegan meal products, is thus to be regarded as an extra operation that offers no advantage, but costs time and money. Consequently, in the present application, glutinous rice and/or glutinous maize are used as binders without any fermentation process at all, and in particular heating of glutinous rice and/or glutinous maize is carried out as a processing step.

## Claims

1. Food product based on ingredients of the vegetarian and vegan type, further comprising one or more natural binders, selected from the group of glutinous rice and glutinous maize.

2. Food product according to Claim 1, **characterized in that** glutinous rice is used as a natural binder.

3. Food product according to either one of Claims 1-2, **characterized in that** the amount of amylose in the aforementioned natural binders is at most 0.5 wt.%, preferably at most 0.1 wt.%, based on the weight of the aforementioned binder.

4. Food product according to one or more of Claims 1-3, **characterized in that** the amount of amylopectin in the aforementioned natural binders is at least 95 wt.%, preferably at least 98 wt.%, based on the weight of the aforementioned binder.

5. Food product according to one or more of the preceding claims, **characterized in that** the amount of one or more natural binders is in the range 1-30 wt.%, preferably 5-20 wt.%, in particular 10-15 wt.%, based on the total weight of the food product.

6. Food product according to one or more of the preceding claims, **characterized in that** the food product contains, as ingredients of the vegetarian and vegan type, one or more ingredients from the group of chickpeas, quinoa, oatmeal, especially gluten-free oatmeal, and sunflower seeds.

7. Food product according to one or more of the preceding claims, **characterized in that** the food product is free from gluten.

8. Food product according to one or more of the preceding claims, **characterized in that** the food product is free from soya proteins.

9. Food product according to one or more of the preceding claims, **characterized in that** the food product is free from chicken proteins.

10. Food product according to one or more of the preceding claims, **characterized in that** the food product is free from one or more supplementary binders, selected from the group of tapioca, arrowroot, linseed, chia seed, psyllium, potato starch, maize starch, E412, E406, E415, E414 and E410.

11. Food product according to one or more of the preceding claims, **characterized in that** the food product is free from added sugars.

12. Food product according to one or more of the preceding claims, **characterized in that** the food product is free from ingredients of animal origin.

13. Food product according to one or more of the preceding claims, **characterized in that** the food product is a meat substitute, especially a hamburger.

14. Food product according to one or more of the preceding claims, **characterized in that** glutinous rice and glutinous maize of the unfermented type are used as one or more natural binders.

15. Method for preparing a food product based on ingredients of the vegetarian and vegan type, and further comprising one or more natural binders, said method comprising the following steps:
i) providing ingredients of the vegetarian and vegan type;
ii) providing one or more natural binders, selected from the group of glutinous rice and glutinous maize;
iii) combining the ingredients according to step i) and ii);
iv) kneading and forming the composition according to step iii).

16. Method for preparing a food product according to Claim 15, further comprising heating the product obtained after step iv).

17. Method for preparing a food product according to either one of Claims 15-16, **characterized in that** glutinous rice and glutinous maize of the unfermented type are used as one or more natural binders in step ii).
